(19) Europäisches Patentamt
European Patent Office
Office européen des brevets

(11) EP 0 986 584 B1

(12) **EUROPEAN PATENT SPECIFICATION**

(45) Date of publication and mention of the grant of the patent:
**25.09.2002 Bulletin 2002/39**

(21) Application number: **98934945.1**

(22) Date of filing: **05.06.1998**

(51) Int Cl.[7]: **C08F 4/72**, C08F 36/04

(86) International application number:
**PCT/EP98/03499**

(87) International publication number:
**WO 98/055517 (10.12.1998 Gazette 1998/49)**

(54) **PROCESS FOR MAKING TERMINALLY FUNCTIONALIZED POLYMERS USING PROTECTED FUNCTIONAL INITIATOR**

VERFAHREN ZUR HERSTELLUNG VON AM KETTENENDE FUNKTIONALISIERTEN POLYMEREN MIT GESCHÜTZTEM FUNKTIONELLEM INITIATOR

PROCEDE PERMETTANT DE PREPARER DES POLYMERES A EXTREMITES FONCTIONNELLES A L'AIDE D'UN INITIATEUR FONCTIONNEL PROTEGE

(84) Designated Contracting States:
**BE DE ES FR GB IT NL**

(30) Priority: **06.06.1997 US 48823 P**

(43) Date of publication of application:
**22.03.2000 Bulletin 2000/12**

(73) Proprietor: **KRATON Polymers Research B.V.**
**1031 CM Amsterdam (NL)**

(72) Inventors:
- **BENING, Robert, Charles**
  **Katy, TX 77450 (US)**
- **GOODWIN, Daniel, Earl**
  **Katy, TX 77450 (US)**
- **HADDIX, Grant, Wesley**
  **Katy, TX 77450 (US)**
- **POTTER, Michael, Wayne**
  **Sugar Land, TX 77478 (US)**
- **SCHISLA, David, Karl**
  **Sugar Land, TX 77479 (US)**
- **SEMPLE, Thomas, Carl**
  **Friendswood, TX 77546 (US)**
- **WILLIS, Carl, Lesley**
  **Houston, TX 77084 (US)**

(74) Representative:
**Kortekaas, Marcellinus C. J. A. et al**
**KRATON Polymers Research B.V.,**
**P.O. Box 37666**
**1030 BH Amsterdam (NL)**

(56) References cited:
**US-A- 4 577 002**
**US-A- 5 391 637**
**US-A- 5 391 663**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 986 584 B1

Printed by Jouve, 75001 PARIS (FR)

## Description

Field of the Invention

The invention relates to a process for making functionalized polymers, comprising the polymerization of one or more unsaturated monomers with a protected functional initiator and recovering a linear or branched polymer having one or more terminal functional groups. It also relates to the functionalized polymers resulting therefrom, that are useful in adhesives, sealants and coatings.

Background of the Invention

Anionic polymerization of unsaturated monomers with lithium initiators, such as sec-butyllithium, and hydrogenation of residual unsaturation has been described in many references.

Great Britain published patent application 2 241 239 and related United States Patent Nos. 5,331,058 and 5,362,699 describe a composition for an anionic protected functional initiator (PFI) having the structure

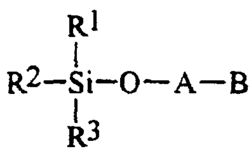

(1)

wherein $R^1$, $R^2$, and $R^3$ are independently selected from saturated and unsaturated aliphatic and aromatic radicals, A is a hydrocarbon bridging group containing from 1 to 25 carbon atoms and B is an alkali metal, such as lithium. These documents disclose that a problem with undesirable termination reactions can occur when using the PFI, particularly if the radicals, $R^1$, $R^2$, and $R^3$ are all methyl or if together they contain less than 4 carbon atoms.

United States Patent No. 5,321,148 describes a process for making a PFI of the structure

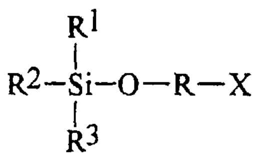

(2)

wherein $R^1$, $R^2$, and $R^3$ are independently selected from alkyl groups containing 1 to 10 carbon atoms and aryl groups containing 6 to 10 carbon atoms, R is selected from alkyl groups containing 2 to 8 carbon atoms either straight chain or substituted by alkyl or aryl groups, and X is selected from chlorine or bromine.

United States Patent No. 5,391,663 describes a polymerization process using a PFI having the structure

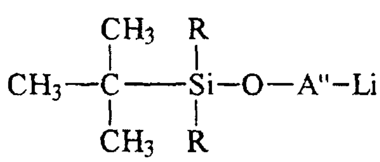

(3)

wherein each R is methyl, ethyl, n-propyl, or n-butyl and A" is an alkyl-substituted or non-substituted propyl bridging group, including $-CH_2$ $-CH_2$ $-CH_2$ -(1,3-propyl), $-CH_2-CH(CH_3)-CH_2-$(2-methyl-1,3-propyl) and $-CH_2-C(CH_3)_2-CH_2-$(2,2-dimethyl-1,3-propyl), or an alkyl-substituted or non-substituted octyl bridging group, including $-CH_2-CH_2-CH_2-CH_2-CH_2-CH_2-CH_2-CH_2-$(1,8-octyl). The lithium compound initiates polymerization of anionic polymers at much higher polymerization temperatures than previously known for PFIs but is very expensive to make and, therefore, commercial impracticable.

United States Patent No. 5,416,168 describes a polymerization process using lithium compounds having the structure:

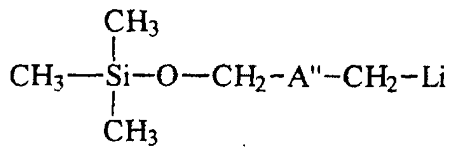 (4)

wherein A" is cyclohexyl or -CR'R"-, wherein R' is a linear alkyl having from 1 to 10 carbon atoms, and R" is hydrogen or a linear alkyl having from 1 to 10 carbon atoms. This PFI also initiates polymerization of anionic polymers at much higher polymerization temperatures than previously known for PFIs and is cost effective to produce.

Unfortunately, it has been found that in commercial applications, where polymerization cycle times of two hours or longer are possible, that even these initiators undergo undesirable termination reactions. The results of these undesirable termination reactions are varied and include (a) limiting the amount of polymer that can be produced from a given amount of initiator; (b) broadening the molecular weight distribution of the polymer; (c) limiting the ability to make well defined block copolymers; and/or (d) limiting the ability for post-polymerization chemistry, such as adding another functional site to the living end of the polymer chain. Therefore it would be highly desirable to develop a process which inhibits undesirable side reactions, resulting in a higher functionality in the polymer product. It would also be desirous to obtain the desired functionality during a commercially viable polymerization reaction time.

<u>Summary of the Invention</u>

The present invention provides a process for making functionalized polymers, comprising the steps of: initiating polymerization of one or more unsaturated monomers with a initiator having the structure

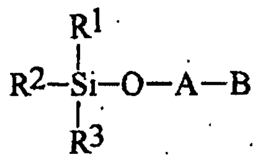

wherein $R^1$, $R^2$, and $R^3$ are independently selected from saturated and unsaturated aliphatic and aromatic radicals, A is a hydrocarbon bridging group containing from 1 to 25 carbon atoms, and B is an alkali metal; polymerizing one or more unsaturated monomers in the presence of a polymerization termination inhibitor having two alkoxy groups, the alkoxy groups being pendent from adjacent carbon atoms in an aliphatic or cyclic hydrocarbon compound, each alkoxy group having from 1-10 carbon atoms; and recovering a linear or branched polymer having one or more terminal functional groups.

In another embodiment of the invention, there is provided a functionalized polymer produced when 1,3-butadiene is polymerized using a initiator having the structure

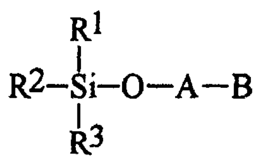

wherein $R^1$, $R^2$, and $R^3$ are independently selected from saturated and unsaturated aliphatic and aromatic radicals, A is a hydrocarbon bridging group containing from 1 to 25 carbon atoms, and B is an alkali metal. The butadiene is polymerized in the presence of a polymerization termination inhibitor having two alkoxy groups, the alkoxy groups being pendent from adjacent carbon atoms in an aliphatic or cyclic hydrocarbon compound, each alkoxy group having from 1-10 carbon atoms, wherein the inhibitor is present in a concentration sufficient to achieve at least 95% difunctional molecules with at least 95% conversion of the conjugated diene.

Detailed Description of the Invention

In general, the present invention will work to reduce or eliminate side reactions when anionically polymerizing conjugated dienes using any silicon-based protected functional initiator. Several PFIs have been described in the art. For example, the production and use of PFIs having the structure

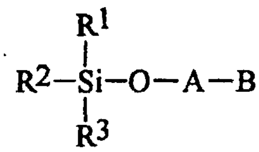

(1)

wherein $R^1$, $R^2$, and $R^3$ are independently selected from saturated and unsaturated aliphatic and aromatic radicals, A is a hydrocarbon bridging group containing from 1 to 25 carbon atoms, and B is an alkali metal, preferably lithium, is described in Great Britain patent application 2 241 239 and United States patent numbers 5,331,058 and 5,362,699. United States patent number 5,321,148 modifies the above PFI wherein $R^1$, $R^2$, and $R^3$ are independently selected from alkyl groups containing 1 to 10 carbon atoms and aryl groups containing 6 to 10 carbon atoms, A is selected from alkyl groups containing 2 to 8 carbon atoms either straight chain or substituted by alkyl or aryl groups, and B is lithium.

In a preferred embodiment, $R^1$, $R^2$ and $R^3$ are each methyl; the hydrocarbon bridging group has the structure $CH_2$-A"-$CH_2$, wherein A" is cyclohexyl or -CR'R"-, R' is a linear alkyl having from 1 to 10 carbon atoms and R" is hydrogen or a linear alkyl having from 1 to 10 carbon atoms; and B is lithium, resulting in the structure

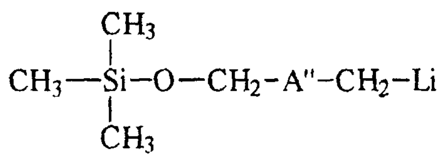

(4)

described in United States Patent No. 5,416,168,

The initiator of structure (4) has been used to prepare polymers of butadiene which have a uniform distribution of 1,2-addition when the amount of 1,2-addition is between 5 and 95 %w, more preferably between 30 to 70 %w.

The alkali metal initiator process is well known. For example, US Patents Nos. 4,039,593 and Re. 27,145 describe the process for lithium initiators and conjugated dienes. Typical living polymer structures that can be made include:

X-B-M

X-B/A-M

X-A-B-M

X-B-A-M

X-B-B/A-M

X-B/A-B-M

X-A-B-A-M

wherein B represents polymerized units of one or more conjugated diene hydrocarbons, A represents polymerized units of one or more vinyl aromatic compounds, B/A represents random polymerized units of the conjugated diene hydrocarbons and the vinyl aromatic monomers, M is an alkali metal, and X is the residue of the initiator. The living polymers are terminated as linear polymers, coupled to form branched polymers, or capped to form additional functional groups by conventional means such as addition of methanol, silicon tetrachloride, divinylbenzene, or ethylene oxide.

When the PFI of Structure (4) is used in the process just described, M is lithium and X is a trimethylsilyl ether group which cleaves, leaving a neopentyl-like primary alcohol group in this position. Unfortunately, the PFI initiators undergo undesirable termination, or "side" reactions. Great Britain patent application 2 241 239 warned of reactivity of the siloxy group and suggested that the radicals $R^1$, $R^2$, and $R^3$ not all be methyl, and preferably that one be aryl, and that the total carbon atoms in the radicals be at least 4, preferably 5. It has now been discovered that the adverse side reactions involve a reaction of the living, C-M, end of the anionic polymer chain with the protected, $R^1R^2R^3SiOC$, end. This side reaction, which appears to occur a little over 10% of the time, results in the transfer of the alkali metal moiety from the growing end of the polymer chain to the inactive, protected functional group end of the molecule. For example, when a PFI of Structure (4) is used, in a little over 10% of the molecules the desired structure of the polymerization product

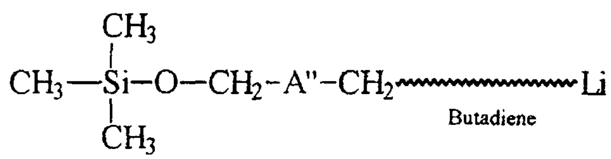

Living Polymer

is converted to the undesired structure

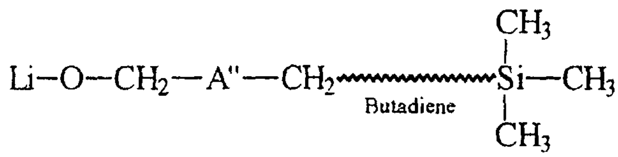

Silicon-Capped Terminated Polymer

In the undesired structure, the C-Li end's reactivity is terminated, making the molecule inert to (i) further polymerization; and (ii) post-polymerization reactions, such as capping with ethylene oxide. Lose of activity in further polymerization affects the cost effectiveness of the initiator, limits the initiator's effectiveness in making block copolymers, and tends to broaden the molecular weight distribution of the product. Lose of post-polymerization reaction capability means that desired reactions, such as reacting the polymer chain with ethylene oxide to make a difunctional telechelic polymer or reacting with a coupling agent to make a linked polymer having functional groups on the ends of the molecules, become limited. Thus the polymer mixture becomes one containing monofunctional impurity, a structural phenomenon of great commercial disadvantage compared to difunctional polymers.

When the unsaturated monomer used is a conjugated diene such as 1,3-butadiene which will be hydrogenated, it is also desirable to control the level of 1,2-addition, which can greatly affect the clarity, rheology, and elastomeric properties of the polymer after hydrogenation. To control the 1,2-addition, the anionic polymerization is typically controlled with high concentrations of structure modifiers such as diethyl ether or 1,2-diethoxyethane. It is desirable that the modifier result in a polybutadiene with 40% to 70% vinyl content. To accomplish this it is typical to use a modifier: chain end ratio of greater than 1:1 mol/mol.

The process of the present invention employs low concentrations of termination inhibitors which inhibit the alkali metal-silicon attack. The inhibitors may be added before the start of polymerization, during the polymerization process, or even after polymerization is complete. The inhibitor must, however, be added before the termination reagent is added. Maximum benefit is seen when the inhibitor is added before the start of polymerization. An advantage of this process is that not only does the resultant product have much less undesirable endcapping compared to uninhibited product, conjugated diene polymers also have the desired vinyl content. Both these features are accomplished with the use of very low inhibitor:chain end ratios.

The inhibitor selected should have two alkoxy groups, the alkoxy groups being pendent from adjacent carbon atoms, and each alkoxy group having from 1-10 carbon atoms. The preferred inhibitors have from 1-4 carbon atoms in the alkoxy groups. These inhibitors, when used in concentrations of from 0.0001 mol/l to 0.0050 mol/l produce conjugated diene polymers having 1,2-additions from 30% to 70%. Examples of preferred polymerization termination

inhibitors are 1,2-dialkoxyethanes such as 1,2-dimethoxyethane, 1,2-diethoxyethane, and 1,2-di-n-butoxyethane; 1,2-dialkoxypropanes such as 1,2-diethoxypropane; o-dialkoxybenzenes such as o-dimethoxybenzene; and furfuryl ethers of the general structure

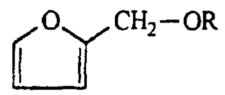

wherein R is methyl, ethyl, or hexyl. A polymerization process using these termination inhibitors undergoes less of the undesired termination reactions than analogous polymerization processes which do not use the polymerization terminator inhibitors. The polymerization process is thus more efficient because a greater number of polymerization sites remain active throughout the polymerization. The polymer produced also has a narrower molecular weight distribution and a higher degree of di- or poly-functionality from the improved reactivity in end capping or coupling reactions.

Commercial polymerization requires that a product be produced during a polymerization time that is both practical for commercialization and safe. When the unsaturated monomers being polymerized are conjugated dienes, commercial polymerization further requires a product of marketable functionality, or a conversion rate of at least 95%. The undesirable side reactions already discussed can easily occur during typical commercial applications where polymerization cycle times of two hours or longer are possible, making it quite difficult to reach this target conversion rate. Therefore, it is necessary to achieve the desired amount of conversion within a controllable time. Polymerization reaction time for a butadiene is 100 minutes to 130 minutes, with a general commercial production target of 120 minutes. The process of the present invention allows the use of PFIs to provide difunctional polymers having at least 95% difunctional molecules and at least 95% conversion of the conjugated diene monomer within the target commercial polymerization time.

Great Britain patent application 2 241 239 suggested that, in order to reduce reactivity of the siloxy group, polymerization temperature be controlled between -30°C and +30°C. Unfortunately, for commercial applications such polymerization temperatures are cost prohibitive, as the reagents must be cooled for such an exothermic reaction. Also, the polymerization time at the lower temperatures is much longer than is commercially feasible. PFIs are very active at room temperature and it has been found that polymerization is preferably initiated at a temperature from 15°C to 60°C, most preferably from 30°C to 40°C. It is generally advisable to keep the polymerization temperature below about 100°C, or side reactions that limit capping efficiency and/or change microstructure may become important. Polymerizations can be carried out over a range of solids levels, preferably from 5 %w to 80 %w polymer, most preferably from 10 %w to 40 %w.

Polymerization may take place using the typical batch process. Certain advantages have been found, however, when a continuously stirred tank reactor, or other continuous flow reactor, such as a plug flow or multiple stage flow reactor, is used, particularly if the unsaturated monomer is butadiene. As mentioned previously, a preferred temperature for polymerization is from 30°C to 40°C. In a batch/semi-batch process, the PFIs are slow to initiate in this temperature range and may never completely initiate. Also, heat released by the exothermic polymerization reaction becomes concentrated into certain regions of the batch cycle, making temperature control difficult. The use of a continuous flow reactor, such as a continuously stirred tank reactor, helps to reduce the impact of these problems. Residence time may be substantially reduced (85% to 90% reduction), further reducing the incidence of undesirable endcaps, without loss of PFI conversion because temperatures may be increased. The continuously stirring or flow also helps evenly distribute the heat load, reducing the required heat removal duties of the batch polymerization reactor.

Anionic polymerization is often terminated by addition of water to remove the lithium as lithium hydroxide (LiOH) or by addition of an alcohol (ROH) to remove the lithium as a lithium alkoxide (LiOR). Polymers prepared from initiators of the present invention and terminated in this way will be mono-hydroxyl functional materials (mono-ols) after removal of the trimethylsilyl ether protecting group. To prepare polymers having an additional terminal functional group, the living polymer chains are preferably terminated with ethylene oxide, oxetane, 2,2-dimethyloxetane, or carbon dioxide to result in functional centers such as hydroxyl, carboxyl, phenol, amine groups, a protected hydroxystyrene monomer, ethylene oxide plus epichlorohydrin (epoxy), or the aziridine compounds listed in US Patent 4,791,174 (amine).

A preferred process of the invention polymerizes 1,3-butadiene at 5% to 30% solids using an initiator having the following structure:

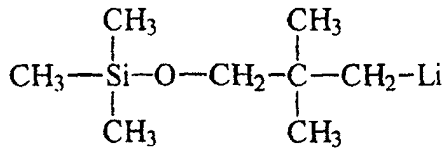

(5)

(3-lithio-2,2-dimethyl-1-trimethylsilyloxypropane). The 1,3-butadiene is added either in batch or by programmed addition of monomer, depending upon the cooling capability of the reactor. Polymerization occurs in the presence of from 0.0001 mol/l to 0.0050 mol/l of a polymerization termination inhibitor selected from 1,2-dimethoxyethane, 1,2-diethoxyethane, 1,2-diethoxypropane, o-dimethoxybenzene, furfuryl ethers, and mixtures thereof. The polymerization reaction time is sufficient to achieve at least 95% conversion of the conjugated diene monomer to polybutadiene.

After polymerization of the desired amount of 1,3-butadiene, the living polymer is capped with ethylene oxide and reacted with methanol to give a terminal primary alcohol functional group on one end of the polymer chain. The silyl ether group on the other end of the chain is then converted to a primary, neopentyl-type hydroxyl group by reaction with aqueous acid or aqueous base affording a telechelic dihydroxyl polymer product.

Hydrogenation of at least 90%, preferably at least 95%, of the unsaturation in low molecular weight butadiene polymers is achieved with nickel catalyst as described in US Patents Re. 27,145, 4,970,254 and 5,166,277 which are incorporated by reference herein.

After polymerization and, optionally, hydrogenation and washing of the polymer, the trimethylsilyl ether group at the front of the polymer chain is removed to generate the desired primary, neopentyl-type hydroxyl functional group. This step is often referred to as deprotection. A variety of processes for removal of the silyl protecting group are known; for a review, see T. W. Greene, "Protective Groups in Organic Synthesis", J. Wiley and Sons, New York, 1981. Deprotection preferably involves easily handled, relatively low toxicity, inexpensive reagents and mild, low cost process conditions. In a preferred process, the trimethylsilyl ether group is removed after hydrogenation and during the aqueous acid wash for removal of the spent Ni/Al hydrogenation catalyst. This technique avoids the cost associated with a separate process step for deprotection. For the preparation of an unsaturated polymer where hydrogenation catalyst extraction is not required, contacting the polymer cement with a dilute aqueous acid or dilute aqueous base solution is preferred for deprotection.

A composition of the instant invention may contain plasticizers, such as rubber extending plasticizers, or compounding oils or organic or inorganic pigments and dyes. Rubber compounding oils are well-known in the art and include both high saturates content oils and high aromatics content oils. Preferred plasticizers are highly saturated oils, e.g. TUFFLO® 6056 and 6204 oil made by Arco and process oils, e.g. SHELLFLEX® 371 oil made by Shell. The amounts of rubber compounding oil employed in the invention composition can vary from 0 to about 500 phr, preferably between 0 to 100 phr, and most preferably between 0 and 60 phr.

Optional components of the present invention are stabilizers which inhibit or retard heat degradation, oxidation, skin formation and color formation. Stabilizers are typically added to the commercially available compounds in order to protect the polymers against heat degradation and oxidation during the preparation, use and high temperature storage of the composition.

Various types of fillers and pigments can be included in the coating or sealant formulation. This is especially true for exterior coatings or sealants in which fillers are added not only to create the desired appeal but also to improve the performance of the coatings or sealant such as its weather-ability. A wide variety of fillers can be used. Suitable fillers include calcium carbonate, clays, talcs, silica, zinc oxide and titanium dioxide. The amount of filler usually is in the range of 0 to about 65 %w based on the solvent free portion of the formulation depending on the type of filler used and the application for which the coating or sealant is intended. An especially preferred filler is titanium dioxide.

The dihydroxylated conjugated diene polymers of the present invention may also be blended with other polymers to improve their impact strength and/or flexibility. Such polymers are generally condensation polymers including polyamides, polyurethanes, vinyl alcohol polymers, vinyl ester polymers, polysulfones, polycarbonates and polyesters, including those, like polyacetones, which have a recurring ester linkage in the molecule, and those, like polyalkylene arylates, including polyalkylene terephthalates, having a structure formed by polycondensation of a dicarboxylic acid with a glycol. The blends may be made in the reactor or in a post compounding step.

The unsaturated monomer polymers, and in particular conjugated diene polymers, produced as described herein have the conventional utilities for terminally functionalized polymers of such as forming adhesives, coatings, and sealants. Additionally, the polymers may be used to modify polyurethanes, polyesters, polyamides, polycarbonates, and epoxy resins. The preferred polymers of the present invention are useful in adhesives (including pressure sensitive adhesives, contact adhesives, laminating adhesives and assembly adhesives), sealants (such as urethane architectural sealants), coatings (such as topcoats for automotive, epoxy primers for metal, polyester coil coatings, alkyd maintenance coatings), films (such as those requiring heat and solvent resistance), molded and extruded thermoplastic and thermoset parts (for example thermoplastic injection molded polyurethane rollers or reaction injection molded thermoset auto bumper, facie).

The present invention is further described by the following examples. The examples are not intended to limit the present invention to specific embodiments.

Examples

In all but Example 13, the polymers were evaluated immediately after polymerization and before being capped with ethylene oxide in order to evaluate the effect of the inhibitors on the silicon endcapping. The percentage of trimethylsilyl endcaps present was measured after 120 minutes of polymerization and again when at least 95% of the butadiene had been converted.

The peak molecular weights were measured using a Carbon-13 Nuclear Magnetic Resonance ($^{13}C$ NMR) method which compares the ratio of the carbon signal that is attributed to the alkyl segment of the initiator to the total carbon signal for the sample.

The 1,2-additions of polybutadiene were measured by $^{13}C$ NMR in chloroform solution.

An initiator of structure (5) (3-lithio-2,2-dimethyl-1-trimethylsilyloxypropane (RLi)) described above was prepared as described in US Patent No. 5,416,168 which description is incorporated by reference herein. An initiator of this type is known as NPFI-1100, from FMC.

Example 1 (0.0011 mol/l 1,2-diethoxypropane)

Reaction of the RLi with butadiene was conducted at 10% reactor solids using 0.0011 mol/l of 1,2-diethoxypropane (DEP) as the polymerization termination inhibitor. The DEP (obtained from Synthetic Chemicals Ltd.) has only two alkoxy groups attached to carbon atoms in an aliphatic hydrocarbon.

Polymerization grade butadiene monomer (200 g, 3.7 mol) in 2.2 l (0.58 gal) cyclohexane and 200 ppm of DEP (0.4 g in 20 g cyclohexane, 0.0011 mol/l) were charged, under nitrogen, into a 3.8 l (1-gallon) autoclave. The solution was stabilized at about 27°C and then 65.6 g of a 16 %w solution of RLi in cyclohexane (0.063 mol RLi) was added with vigorous stirring. Polymerization was initiated at about 27°C and the resulting exothermic reaction raised the solution temperature to about 40°C. Polymerization was allowed to proceed for 120 minutes.

At ten minute intervals during polymerization, an aliquot of the living polymer solution was removed from the autoclave and quenched immediately by addition of an excess of MeOH. A final aliquot of the living polymer was taken at 120 minutes.

The number average molecular weight and vinyl content of the samples were measured by $^{13}C$ NMR. The molecular weight of the final (120 minute) sample was 3617 and the sample had a 67% vinyl content. At 120 minutes, 88.5% of the butadiene had converted, and 1.4% of the ends were capped with trimethylsilyl. It was calculated that 1.7% of the ends would be capped with trimethylsilyl at 95% conversion. Capping with ethylene oxide would be expected to produce a polymer having about 98.6% difunctional molecules (calculated to about 98.3% difunctional molecules at 95% conversion). The results are shown in the Table.

Example 2 (0.0013 mol/l 1,2-diethoxyethane)

A second polymerization experiment conducted under similar conditions as Example 1 used 65 g of a 16 %w solution of RLi in cyclohexane (0.062 mol RLi), 200 g (3.7 mol) of butadiene, $\sqrt{2}.2\ \ell$ (0.58 gal) of cyclohexane, and 200 ppm of 1,2-diethoxyethane (0.4 g in 20 g cyclohexane, 0.0013 mol/l). The molecular weight of the final sample was 3996 and the sample had a 69% vinyl content. At 120 minutes, 95.6% of the butadiene had converted, and 2.3% of the ends were capped with trimethylsilyl. Capping with ethylene oxide would be expected to produce about 97.7% difunctional molecules at 95% conversion. The results are shown in the Table.

Example 3 (0.0039 mol/l o-dimethoxybenzene)

A third polymerization experiment conducted under similar conditions as Example 1 used 65 g of a 16 %w solution of RLi in cyclohexane (0.062 mol RLi), 200 g (3.7 mol) of butadiene, $\sqrt{2}.2\ \ell$ (0.58 gal) of cyclohexane, and 700 ppm of o-dimethoxybeneze (o-DMB) (1.4 g in 20 g cyclohexane, 0.0039 mol/l). The samples were removed at 30, 51, 90 and 120 minutes. The sample taken at about 50 minutes was found to have reached 95% conversion of the butadiene with 2.4% of the ends being capped with trimethylsilyl (about 98% difunctional molecules at 95% conversion). The 90-minute sample had reached full conversion. The molecular weight of the final sample was 4183 and the sample had a 54% vinyl content. At 120 minutes, 100% of the butadiene had converted, and 6.2% of the ends were capped

with trimethylsilyl. The results are shown in the Table. Capping with ethylene oxide would be expected to produce a polymer that is 93.8% difunctional.

Example 4 (0.0009 mol/l 1,2-diethoxypropane)

A fourth polymerization experiment conducted under similar conditions as Example 1 used 65 g of a 16 %w solution of RLi in cyclohexane (0.062 mol RLi), 200 g (3.7 mol) of butadiene, 2.2 l (0.58 gal) of cyclohexane, and 150 ppm of DEP (0.3 g in 20 g cyclohexane, 0.0009 mol/l). The molecular weight of the final sample was 4029 and the sample had a 53% vinyl content. At 120 minutes, 96% of the butadiene had converted, and 3% of the ends were capped with trimethylsilyl. Capping with ethylene oxide would be expected to produce about 97% difunctional molecules at 96% conversion. The results are shown in the Table.

Example 5 (0.0006 mol/l 1,2-diethoxypropane)

A fifth polymerization experiment conducted under similar conditions as Example 1 used 65 g of a 16 %w solution of RLi in cyclohexane (0.062 mol RLi), 200 g (3.7 mol) of butadiene, 2.2 l (0.58 gal) of cyclohexane, and 100 ppm of 1,2-diethoxypropane (DEP) (0.2 g in 20 g cyclohexane, 0.0006 mol/l). The molecular weight of the final sample was 3445 and the sample had a 46% vinyl content. At 120 minutes, 89.9% of the butadiene had converted, and 3.1% of the ends were capped with trimethylsilyl, with a 3.5% of the ends calculated to be capped with trimethylsilyl at 95% conversion. Capping with ethylene oxide would be expected to produce about 96.5% difunctional: molecules at 96% conversion. The results are shown in the Table.

Example 6 (0.0010 mol/l diglyme) (comparative)

A sixth polymerization experiment conducted under similar conditions as Example 1 used 67.1 g of a 16 %w solution of RLi in cyclohexane (0.065 mol RLi), 200 g (3.7 mol) of butadiene, 2.2 l (0.58 gal) of cyclohexane, and 200 ppm of diglyme ($CH_3$-$CH_2$-O-$CH_2$-$CH_2$-O-$CH_2$-$CH_2$-O-$CH_2$-$CH_3$) (0.0010 mol/l). The molecular weight of the final sample was 3560 and the sample had a 55% vinyl content. At 120 minutes, 98% of the butadiene had converted, and 7% of the ends were capped with trimethylsilyl (6.2% of the ends were capped with trimethylsilyl at 95% conversion). Capping with ethylene oxide would be expected to produce about 93% difunctional molecules at 98% conversion (93.8% difunctional molecules at 95% conversion). The results are shown in the Table.

Example 7 (1.05 mol/l diethylether) (comparative)

A seventh polymerization experiment conducted under similar conditions as Example 1 used 65 g of a 16 %w solution of RLi in cyclohexane (0.064 mol RLi), 200 g (3.7 mol) of butadiene, 2.2 l (0.58 gal) of cyclohexane, and 10% by weight of the solvent of diethylether (DEE) (1.05 mol/l). The molecular weight of the final sample was 3853 and the sample had a 42% vinyl content. At 120 minutes, 100% of the butadiene had converted, and 15.7% of the ends were capped with trimethylsilyl (8.2% of the ends were capped with trimethylsilyl at 95% conversion). Capping with ethylene oxide would be expected produce about 84.3% difunctional molecules at 100% conversion (91.8% difunctional molecules at 95%). The results are shown in the Table.

Example 8 (0.0003 mol/l 1,2-diethoxypropane)

An eighth polymerization experiment conducted under similar conditions as Example 1 used 65.3 g of a 16 %w solution of RLi in cyclohexane (0.062 mol RLi), 200 g (3.7 mol) of butadiene, 2.2 l (0.58 gal) of cyclohexane, and 50 ppm of DEP (20 g of a 0.5 %w solution of DEP in cyclohexane solution, 0.0003 mol/l). The molecular weight of the final sample was 2978 and the sample had a 26% vinyl content. At 120 minutes, 78.6% of the butadiene had converted, and 5.8% of the ends were capped with trimethylsilyl (extrapolated to 8.5% trimethylsilyl endcaps at 95% conversion). Capping with ethylene oxide would be expected to produce about 94.2% difunctional molecules at 79% conversion (91.5% difunctional at 95% conversion). The results are shown in the Table.

Example 9 (0.0032 mol/l 1,2,3-trimethoxybenzene) (comparative)

A ninth polymerization experiment conducted under similar conditions as Example 1 used 65.1 g of a 16 %w solution of RLi in cyclohexane (0.063 mol RLi), 200 g (3.7 mol) of butadiene, 2.2 l (0.58 gal) of cyclohexane, and 700 ppm of 1,2,3-trimethoxybenzene (1,2,3-TMB) (1.4 g dissolved in 20 g cyclohexane, 0.0032 mol/l). The molecular weight of the final sample was 3501 and the sample had a 49% vinyl content. At 120 minutes, 87% of the butadiene had

converted, and 8.3% of the ends were capped with trimethylsilyl (extrapolated to 11% trimethylsilyl endcaps at 95% conversion). Capping with ethylene oxide would be expected to produce about 91.7% difunctional molecules at 87% conversion (89% difunctional at 95% conversion). The results are shown in the Table.

Example 10 (no inhibitor) (comperative)

A tenth polymerization experiment conducted under similar conditions as Example 1 used 65.9 g of a 16 %w solution of RLi in cyclohexane (0.063 mol RLi), 200 g (3.7 mol) of butadiene, $\sqrt{2}$.2 ℓ (0.58 gal) of cyclohexane, and no polymerization termination inhibitor. The molecular weight of the final sample was 2786 and the sample had a 10% vinyl content. At 120 minutes, 68% of the butadiene had converted, and 9.9 of the ends were capped with trimethylsilyl (extrapolated to 15% trimethylsilyl endcaps at 95% conversion).. Capping with ethylene oxide would be expected to produce about 90.1% difunctional molecules at 68% conversion (85% difunctional at 95% conversion). The results are shown in the Table.

Example 11 (0.0032 mol/l 1,2,4-trimethoxybenzene) (comparative)

An eleventh polymerization experiment conducted under similar conditions as Example 1 used 67.3 g of a 16 %w solution of RLi in cyclohexane (0.065 mol RLi), 200 g (3.7 mol) of butadiene, $\sqrt{2}$.2 ℓ (0.58 gal) of cyclohexane, and 700 ppm of 1,2,4-trimethoxybenzene (1,2,4-TMB) (1.4 g in 20 g cyclohexane, 0.0032 mol/l). The molecular weight of the final sample was 3430 and the sample had a 48% vinyl content. At 120 minutes, 81% of the butadiene had converted, and 15.6% of the ends were capped with trimethylsilyl (extrapolated to 26% trimethylsilyl endcaps at 95% conversion). Capping with ethylene oxide would be expected to produce about 84.4% difunctional molecules at 81% conversion (74% difunctional at 95% conversion). The results are shown in the.Table.

Example 12 (0.0009 mol/l 12-crown-4) (comparative)

A twelfth polymerization experiment conducted under similar conditions as Example 1 used 66.8 g of a 16 %w solution of RLi in cyclohexane (0.063 mol RLi), 200 g (3.7 mol) of butadiene, 2.2 l (0.58 gal) of cyclohexane, and 200 ppm of 12-crown-4 (cyclic $(-CH_2-CH_2-O-)_4$ ) (0.4 g in 20 g cyclohexane, 0.0009 mol/l). The molecular weight of the final sample was 2820 and the sample had a 18% vinyl content. At 120 minutes, 62.4% of the butadiene had converted, and 19.6% of the ends were capped with trimethylsilyl (extrapolated to 28% trimethylsilyl endcaps at 95% conversion). Capping with ethylene oxide would be expected to produce about 80.4% difunctional molecules at 62% conversion (72% difunctional at 95% conversion). The results are shown in the Table.

Example 13 (0.0023 mol/l o-DMB)

A thirteenth polymerization experiment was conducted under conditions similar to Example 3; however, the sample was capped with ethylene oxide.

94.3 g of an 11 %w solution of RLi in cyclohexane (0.062 mol RLi) was added, with vigorous stirring under nitrogen, to a steel autoclave containing a solution of polymerization grade butadiene monomer (200 g, 3.7 mol) in 1700 g of cyclohexane containing 700 ppm of o-DMB (1.4 g in 20 g of cyclohexane, 0.0039 mol/l). Polymerization was initiated at 24°C with the resulting exothermic reaction raising the solution temperature to 43°C.

After the lithium initiator was added to the autoclave, ten aliquots of living polymer solution were removed from the autoclave during the polymerization. After 66 minutes of reaction the bulk of the solution in the reactor, which was living butadiene polymer having a trimethyl siloxy moiety on one end of the polymer chain, was treated with excess ethylene oxide (4.2 g, 0.095 mol). The temperature at which the ethylene oxide was added was 36°C. The ethyloxylation reaction was allowed to proceed for 45 minutes at 37-38°C. The cement was then treated with 4 g of methanol. An aliquot of the resulting polymer cement was removed for analysis. Analysis of the polymer sample by Hydrogen-1 Nuclear Magnetic Resonance ($^1H$ NMR) revealed a number average molecular weight of 3363. Analysis of the sample for vinyl content, also using $^1H$ NMR, found that 52.2% of the butadiene had added by 1,2-polymerization affording pendant vinyl unsaturation, with the remainder added by 1,4-polymerization. $^1H$ NMR also found that 96% mol of the living polymer endgroups reacted with the ethylene oxide to form terminal hydroxyl groups. $^1H$ NMR analysis further revealed the resulting polymer had at least 95% difunctional molecules with at least 95% conversion of the monomer as shown in the Table.

Table.

| | At 120 min.: MW | %Vinyl | %Conv | Inhibitor to Chain End (mol/mol) | Butadiene-Trimethysilyl Capping Level (%) at Polymerization Time 20 min | 40 min | 60 min | 80 min | 100 min | 120 min |
|---|---|---|---|---|---|---|---|---|---|---|
| **1,2-diethoxyethane** | | | | | | | | | | |
| Example 2 | 3965 | 69 | 95.6 | 0.054/1 | 0.7 | 0.7 | 1.0 | 1.5 | 1.9 | 2.3 |
| **1,2-diethoxypropane** | | | | | | | | | | |
| Example 1 | 3617 | 67 | 88.5 | 0.048/1 | 0.2 | 0.3 | 0.6 | 1 | 1.2 | 1.4 |
| Example 4 | 4029 | 53 | 96 | 0.04/1 | 8.0 | 4.0 | 0.9 | 1 | 2 | 3 |
| Example 5 | 3445 | 46 | 89.9 | 0.024/1 | 2.7 | 0.5 | 0.7 | 1.6 | 2.4 | 3.1 |
| Example 8 | 2978 | 26 | 78.6 | 0.012/1 | 1.9 | 0.7 | 1.5 | 3.3 | 4.7 | 5.8 |
| **o-dimethoxybenzene** | | | | | | | | | | |
| Example 3 | 4183 | 54 | 100 | 0.17/1 | (0.2)[a] | (1.6)[a] | (2.7)[a] | (3.8)[a] | (5.0)[a] | 6.2 |
| Example 13 | 3363 | 52 | >95 | | | | | | | 4.0 |
| **diglyme** | | | | | | | | | | |
| Example 6 | 3560 | 55 | 98 | 0.04/1 | 1.1 | 1.8 | 2.8 | 4.2 | 5.7 | 7.0 |
| **1,2,3-trimethoxybenzene** | | | | | | | | | | |
| Example 9 | 3501 | 49 | 87 | 0.13/1 | 0.3 | (0.4)[a] | 1.2 | 3.6 | 5.3 | 7.7 |
| Example 11 | 3430 | 48 | 81 | 0.13/1 | 0.2 | (1.3)[a] | 3/8 | 8.1 | 11.7 | 14.7 |

| | | | | | | | | | | |
|---|---|---|---|---|---|---|---|---|---|---|
| **diethylether** | | | | | | | | | | |
| Example 7 | 3853 | 42 | 100 | 43/1 | 1.8 | 4.9 | 8.6 | 11.3 | 13.4 | 15.7 |
| **12-crown-4** | | | | | | | | | | |
| Example 12 | 2820 | 18 | 62.4 | 0.036/1 | 17.2 | 9.5 | 11.4 | 15.6 | 17.5 | 19.6 |
| **no inhibitor** | | | | | | | | | | |
| Example 10 | 2786 | 10 | 68 | 0/1 | 30.7 | 5.6 | 3.3 | 5.9 | 8.2 | 9.9 |

[a] Interpolated from results of samples taken at different polymerization times

It is desirable for the inhibitor to produce a polymer with the desired 1,2-addition and at least 95% butadiene conversion. The preferred inhibitor should produce a polymer having less than 5% trimethylsilyl at 95% butadiene conversion.

The result shows that low levels of polymerization termination inhibitors are effective for increasing the amount of difunctional polymer at high conversion of the monomer within a commercially viable polymerization reaction time. Examples 1-6 and 13 all had less than 10% trimethylsilyl endcaps at both 95% conversion and at 120 minutes of polymerization reaction time as well as vinyl contents greater than 40%. Examples 1, 2, 4, 5, and 13 all had less than 5% trimethylsilyl endcaps at both 95% conversion and at 120 minutes of polymerization reaction. These five examples further reached 95% conversion at between 100 minutes and 130 minutes of reaction time. Example 3 reached 95% conversion a little early for commercial control, however a lesser amount of inhibitor (less than 0.0039 mol/l) should allow the inhibitor of Example 3 to be used effectively.

## Claims

1. A process for making functionalized polymers, comprising the steps of: initiating polymerization of one or more unsaturated monomers with an initiator having the structure

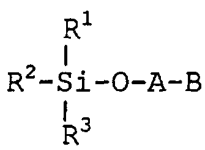

wherein $R^1$, $R^2$, and $R^3$ are independently selected from saturated and unsaturated aliphatic and aromatic radicals, A is a hydrocarbon bridging group containing from 1 to 25 carbon atoms, and B is an alkali metal; polymerizing one or more unsaturated monomers in the presence of a polymerization termination inhibitor selected from the group of furfuryl ethers and inhibitors having two alkoxy groups, the alkoxy groups being pendent from adjacent carbon atoms in an aliphatic or cyclic hydrocarbon compound, each alkoxy group having from 1-10 carbon atoms; and recovering a linear or branched polymer having one or more terminal functional groups.

2. A process according to claim 1, wherein the unsaturated monomer is a conjugated diene and wherein the inhibitor is present in a concentration sufficient to achieve at least 95% difunctional molecules with at least 95% conversion of said conjugated diene at between 100 minutes and 130 minutes of polymerization reaction time.

3. A process according to claim 1, wherein the concentration of polymerization termination inhibitor is from 0.0001 mol/1 to 0.0050 mol/1 and wherein the inhibitor is selected from 1,2-dialkoxyethanes, 1,2-dialkoxypropanes, o-dialkoxybenzenes, and combinations thereof.

4. A process according to any one of claims 1 to 3, wherein the polymerization termination inhibitor is selected from 1,2-dimethoxyethane, 1,2-diethoxyethane, 1,2-diethoxypropane, o-dimethoxybenzene and furfuryl ethers of the general structure

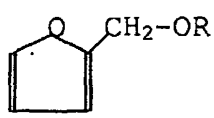

wherein R is methyl, ethyl or hexyl.

5. A process according to any one of claims 1 to 4 wherein the initiator has the structure wherein $R^1$, $R^2$ and $R^3$ are each methyl; the hydrocarbon bridging group has the structure $CH_2$-A"-$CH_2$, wherein A" is cyclohexyl or -CR'R"-, R' is a linear alkyl having from 1 to 10 carbon atoms and R" is hydrogen or a linear alkyl having from 1 to 10 carbon atoms; and B is lithium.

6. A process according to any one of claims 1 to 5, further comprising the step of reacting the polymer with ethylene oxide prior to recovering the polymer.

7. A process according to any one of claims 1 to 6, wherein the unsaturated monomer is a conjugated diene.

8. A process according to claim 7 wherein the conjugated diene is 1,3-butadiene, optionally further comprising the step of hydrogenating the polymerized butadiene.

## Patentansprüche

1. Verfahren zur Herstellung von funktionalisierten Polymeren, das die folgenden Stufen umfaßt: Initiieren der Polymerisation eines oder mehrerer ungesättigter Monomere mit einem Initiator mit der Struktur

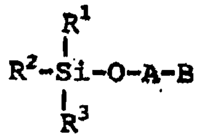

,

worin $R^1$, $R^2$ und $R^3$ unabhängig voneinander unter gesättigten und ungesättigten aliphatischen und aromatischen Resten ausgewählt sind, A eine Kohlenwasserstoffbrückengruppe mit einem Gehalt an 1 bis 25 Kohlenstoffatomen ist und B ein Alkalimetall darstellt; Polymerisieren eines oder mehrerer ungesättigter Monomere in Gegenwart eines Polymerisationsabbruchinhibitors, ausgewählt aus der Gruppe von Furfurylethern und Inhibitoren mit zwei Alkoxygruppen, wobei die Alkoxygruppen an benachbarten Kohlenstoffatomen in einer aliphatischen oder cyclischen Kohlenwasserstoffverbindung hängen, worin jede Alkoxygruppe 1 bis 10 Kohlenstoffatome aufweist; und Gewinnen eines linearen oder verzweigten Polymers, das eine oder mehrere endständige funktionelle Gruppen aufweist.

2. Verfahren nach Anspruch 1, worin das ungesättigte Monomer ein konjugiertes Dien ist und worin der Inhibitor in einer Konzentration vorliegt, die ausreicht, um wenigstens 95% difunktionelle Moleküle mit einer wenigstens 95%igen Umwandlung des konjugierten Diens bei einer Polymerisationsreaktionsdauer zwischen 100 Minuten und 130 Minuten zu erreichen.

3. Verfahren nach Anspruch 1, worin die Konzentration an Polymerisationsabbruchinhibitor von 0,0001 Mol/l bis 0,0050 Mol/l beträgt und worin der Inhibitor unter 1,2-Dialkoxyethanen, 1,2-Dialkoxypropanen, o-Dialkoxybenzolen und Kombinationen hievon ausgewählt wird.

4. Verfahren nach einem der Ansprüche 1 bis 3, worin der Polymerisationsabbruchinhibitor unter 1,2-Dimethoxyethan, 1,2-Diethoxyethan, 1,2-Diethoxypropan, o-Dimethoxybenzol und Furfurylethern mit der allgemeinen Struktur

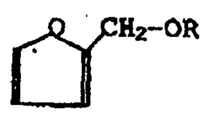

,

worin R für Methyl, Ethyl oder Hexyl steht, ausgewählt wird.

5. Verfahren nach einem der Ansprüche 1 bis 4, worin der Initiator die Struktur aufweist, in der $R^1$, $R^2$ und $R^3$ jeweils Methyl bedeuten; die Kohlenwasserstoffbrückengruppe die Struktur $CH_2$-A"-$CH_2$ aufweist, worin A" für Cyclohexyl oder -CR'R"- steht, worin R' ein lineares Alkyl mit 1 bis 10 Kohlenstoffatomen ist und R" Wasserstoff oder ein lineares Alkyl mit 1 bis 10 Kohlenstoffatomen ist; und B Lithium bedeutet.

**6.** Verfahren nach einem der Ansprüche 1 bis 5, das weiterhin die Stufe des Umsetzens des Polymers mit Ethylenoxid vor dem Gewinnen des Polymers umfaßt.

**7.** Verfahren nach einem der Ansprüche 1 bis 6, worin das ungesättigte Monomer ein konjugiertes Dien ist.

**8.** Verfahren nach Anspruch 7, worin das konjugierte Dien 1,3-Butadien ist, wobei das Verfahren gegebenenfalls zusätzlich die Stufe des Hydrierens des polymerisierten Butadiens umfaßt.

## Revendications

**1.** Procédé de préparation de polymères à extrémités fonctionnelles, comprenant les étapes de: initier la polymérisation d'un ou plusieurs monomères insaturés au moyen d'un initiateur ayant la structure

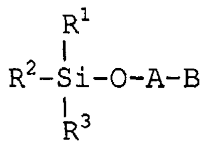

dans laquelle $R^1$, $R^2$, et $R^3$ sont indépendamment choisis parmi les radicaux aliphatiques et aromatiques saturés et non saturés, A est un groupe en pont d'hydrocarbure contenant de 1 à 25 atomes de carbone, et B est un métal alcalin; polymériser un ou plusieurs monomères non saturés en présence d'un inhibiteur d'arrêt de la polymérisation choisi dans le groupe des éthers furfuryliques et des inhibiteurs comprenant deux groupes alkoxy, les groupes alkoxy étant dépendants d'atomes de carbone adjacents dans un composé d'hydrocarbure aliphatique ou cyclique, chaque groupe alkoxy ayant de 1 à 10 atomes de carbone; et récupérer un polymère linéaire ou ramifié comprenant un ou plusieurs groupes fonctionnels terminaux.

**2.** Procédé selon la revendication 1, dans lequel le monomère non saturé est un diène conjugué et dans lequel l'inhibiteur est présent en une concentration suffisante pour obtenir au moins 95% de molécules bifonctionnelles avec au moins 95% de conversion de ce diène conjugué à entre 100 minutes et 130 minutes du temps de réaction de polymérisation.

**3.** Procédé selon la revendication 1, dans lequel la concentration de l'inhibiteur d'arrêt de polymerization est de 0.0001 mol/1 à 0.0050 mol/1 et dans lequel l'inhibiteur est choisi parmi les 1,2-dialkoxyéthanes, 1,2-dialkoxypropanes, o-dialkoxybenzènes, et des combinaisons de ceux-ci.

**4.** Procédé selon l'une quelconque des revendications 1 à 3 dans lequel l'inhibiteur d'arrêt de la polymérisation est choisi parmi le 1,2-diméthoxyéthane, 1,2-diéthoxyéthane, 1,2-diéthoxypropane, o-diméthoxybenzène et ethers furfuryliques de la structure générale:

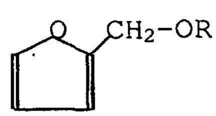

dans laquelle R est un groupe méthyle, éthyle ou hexyle.

**5.** Procédé selon l'une quelconque des revendications 1 à 4 dans lequel l'initiateur a la structure où $R^1$, $R^2$ et $R^3$ sont chacun un méthyle; le groupe en pont d'hydrocarbure a la structure $CH_2$-A"-$CH_2$, où A" est un cyclohexyle ou -CR'R"-, R' est un alkyle linéaire ayant de 1 à 10 atomes de carbone et R" est un hydrogène ou un alkyle linéaire ayant de 1 à 10 atomes de carbone; et B est du lithium.

**6.** Procédé selon l'une quelconque des revendications 1 à 5, comprenant en outre l'étape de faire réagir le polymère

avec l'oxyde d'éthylène avant la récupération du polymère.

7. Procédé selon l'une quelconque des revendications 1 à 6, dans lequel le monomère non-saturé est un diène conjugué.

8. Procédé selon la revendication 7, dans lequel le diène conjugué est le 1,3-butadiène, facultativement comprenant en outre l'étape d'hydrogéner le butadiène polymérisé.